# EUROPEAN PATENT APPLICATION

(11) **EP 4 712 435 A1**
(43) Date of publication of application: **18.03.2026**
(21) Application number: 24818235.4
(22) Date of filing: 19.01.2024
(51) Int. Cl.: H04L 47/62

(54) **PACKET FORWARDING METHOD AND APPARATUS, ELECTRONIC DEVICE, AND STORAGE MEDIUM**

(30) Priority: 07.06.2023 CN 202310674360
(71) Applicant: ZTE CORPORATION, Shenzhen, Guangdong 518057 (CN)
(72) Inventor: ZHU, Xiangyang, Shenzhen, Guangdong 518057 (CN); YU, Jinghai, Shenzhen, Guangdong 518057 (CN)
(74) Representative: Ziebig Hengelhaupt Intellectual Property Attorneys Patentanwaltskanzlei PartGmbB
(86) International application number: PCT/CN2024/073366
(87) International publication number: WO 2024/250697

(57) **Abstract**

The present application relates to the technical field of communications, and discloses a packet forwarding method and apparatus, an electronic device, and a storage medium. The method comprises: a sink node receives a packet sent by a previous node, wherein the packet carries an upstream sending slot identifier and an admission slot offset; on the basis of an out-slot number corresponding to the upstream sending slot identifier and a currently sent queue number, determining a first queue number corresponding to the packet; adjusting the first queue number on the basis of the admission slot offset to obtain a second queue number; and caching the packet to a sending queue corresponding to the second queue number for forwarding.

## Description

### CROSS-REFERENCE TO RELATED APPLICATIONS

The present application claims the priority of the Chinese patent application No. 202310674360.9 filed to the China Patent Office on June 7, 2023, and entitled "PACKET FORWARDING METHOD AND APPARATUS, ELECTRONIC DEVICE, AND STORAGE MEDIUM", of which the entire contents are incorporated herein by reference.

### TECHNICAL FIELD

Embodiments of the present application relate to the technical field of communications, and particularly relate to a packet forwarding method and apparatus, an electronic device, and a storage medium.

### BACKGROUND

In a precise slot orchestration technology for deterministic periodic scheduling, a control plane plans an admission (also access) slot for services, and service packets need to access and be borne according to the access slot. When a service packet arrives at a source provider edge node (source PE node), an arrival slot of the service packet may be inconsistent with the access slot. In order to enable the services to access according to the access slot, a certain shaping mechanism needs to be applied within a source PE. In the related art, an applicable deterministic periodic scheduling mechanism can only ensure that jitter from the access slot to a sink PE egress after shaping is less than 2T (where T is a slot length of a periodic scheduling template), however, at the source node (source PE node), boundary jitter introduced by the shaping mechanism such as access control still cannot be controlled.

### SUMMARY

Embodiments of the present application provide a packet forwarding method and apparatus, an electronic device, and a storage medium, which can solve the problem of boundary jitter introduced by a source node.

In order to solve the above technical problems, the present application is implemented as follows.

In a first aspect, a packet forwarding method is provided. The packet forwarding method is performed by a sink node of a deterministic network, and includes: receiving, by the sink node, a packet from a previous node, wherein the packet carries an upstream sending slot identifier and an access slot offset; determining a first queue number corresponding to the packet on the basis of an out-slot number corresponding to the upstream sending slot identifier and a currently sent queue number; adjusting the first queue number on the basis of the access slot offset to obtain a second queue number; and caching the packet to a sending queue corresponding to the second queue number for forwarding.

In a second aspect, a packet forwarding method is provided. The packet forwarding method is performed by a source node of a deterministic network, and includes: receiving, by the source node, a packet and acquiring an arrival slot of the packet, wherein the packet includes an initial slot identifier of the packet; determining an access slot of the packet according to the initial slot identifier; determining an access slot offset of the packet according to the arrival slot and the access slot; and encapsulating the access slot offset into the packet and forwarding the packet to a next node.

In a third aspect, a packet forwarding apparatus is provided, and includes: a receiving module, configured to receive a packet from a previous node, wherein the packet carries an upstream sending slot identifier and an access slot offset; a determining module, configured to determine a first queue number corresponding to the packet on the basis of an out-slot number corresponding to the upstream sending slot identifier and a currently sent queue number; an adjusting module, configured to adjust the first queue number on the basis of the access slot offset to obtain a second queue number; and a forwarding module, configured to cache the packet to a sending queue corresponding to the second queue number for forwarding.

In a fourth aspect, a packet forwarding apparatus is provided, and includes: an acquiring module, configured to receive a packet and acquire an arrival slot of the packet, wherein the packet includes an initial slot identifier of the packet; a first determining module, configured to determine an access slot of the packet according to the initial slot identifier; a second determining module, configured to determine an access slot offset of the packet according to the arrival slot and the access slot; and a forwarding module, configured to encapsulate the access slot offset into the packet and forward the packet to a next node.

In a fifth aspect, a computer device is provided. The computer device includes a processor and a memory, the memory stores at least one computer program, and the at least one computer program is loaded and executed by the processor to implement the steps of the method described in the first aspect above, or implement the steps of the method described in the second aspect above.

In a sixth aspect, a computer-readable storage medium is provided. The computer-readable storage medium stores at least one computer program therein, and the computer program is loaded and executed by a processor to implement the steps of the method described in the first aspect above, or implement the steps of the method described in the second aspect above.

In a seventh aspect, a computer program product is provided. The computer program product includes at least one computer program, and the computer program is loaded and executed by a processor to implement the steps of the method described in the first aspect above, or implement the steps of the method described in the second aspect above.

### BRIEF DESCRIPTION OF DRAWING(S)

Accompanying drawings here, which are incorporated in and constitute a part of this specification, illustrate embodiments consistent with the present application and together with the specification, serve to explain the principles of the present application.
FIG. 1 is a schematic diagram of a slot access technology provided by embodiments of the present application.
FIG. 2 is a schematic flowchart of a packet forwarding method applied to a sink node of a deterministic network provided by embodiments of the present application.
FIG. 3 is a schematic diagram of a packet forwarding method applied to a sink node of a deterministic network provided by embodiments of the present application.
FIG. 4 is a schematic flowchart of a packet forwarding method applied to a source node of a deterministic network provided by embodiments of the present application.
FIG. 5 is a schematic diagram of a packet encapsulation format provided by embodiments of the present application.
FIG. 6 is a schematic diagram of another packet encapsulation format provided by embodiments of the present application.
FIG. 7 is a schematic diagram of yet another packet encapsulation format provided by embodiments of the present application.
FIG. 8 is a schematic flowchart of a method for controlling boundary jitter provided by embodiments of the present application.
FIG. 9 is a schematic diagram of a method for controlling boundary jitter provided by embodiments of the present application.
FIG. 10 is a schematic diagram of another method for controlling boundary jitter provided by embodiments of the present application.
FIG. 11 is a schematic diagram of a packet forwarding apparatus provided by embodiments of the present application.
FIG. 12 is a schematic diagram of another packet forwarding apparatus provided by embodiments of the present application.
FIG. 13 is a schematic structural diagram of an electronic device according to embodiments of the present application.

### DETAILED DESCRIPTION

Exemplary embodiments will be illustrated in detail here, examples of which are represented in accompanying drawings. In a case where the following descriptions refer to the accompanying drawings, the same number in the different accompanying drawings represents the same or similar elements unless otherwise indicated. The implementations described in the following exemplary embodiments do not represent all implementations consistent with the present application. On the contrary, they are merely examples of an apparatus and method consistent with some aspects of the present application as detailed in the appended claims.

In order to better understand the technical solution provided in the present application, the technology involved in the present application is introduced first.

The IETF DetNet working group has proposed a large-scale deterministic network (LDN) technology. According to the LDN technology, periodic queuing and forwarding technologies are applied to wide area networks, the packet is extended to carry an upstream sending slot label, scheduling is performed at a downstream node according to the slot label, thereby solving a series of technical problems caused by time asynchronization and long links between nodes.

There are two types of service access control technologies at a head node (source PE) of the LDN. One type of service access technology bears services according to an actual arrival window of the services, with packets being transmitted immediately upon arrival. Therefore, the control range of jitter is from ingress of a source PE to egress of a sink PE in an LDN domain. However, this access technology has the disadvantage that due to the diversity and randomness of service periods, it is impossible to accurately predict a moment when the packets actually arrive at the source PE on the control plane, and the control plane can only perform bandwidth admission for the services based on the worst case, resulting in a problem of bandwidth expansion. For example, assuming that the number of slot queues in a certain periodic scheduling template is 8 (with slot numbers from 0 to 7), T=10 us, the characteristic of service flow is to send one packet every 40 us, which may fall into slots 0 and 4, and may also fall into slots 1 and 5, 2 and 6, or 3 and 7. However, due to the inability to accurately determine the period to which the packet falls in, it is necessary to equivalently consider that the packet may fall into any slot. In this case, the control plane needs to expand the bandwidth by four times. For another example, if a certain service flow is a random burst service flow with a bandwidth of 10 Mbps, and because the arrival pattern and characteristics of service packets cannot be predicted, the bandwidth of the service flow need to be expanded by 8 times so as to avoid congestion. Bandwidth expansion causes problems such as reduced bandwidth utilization and limited service access amount.

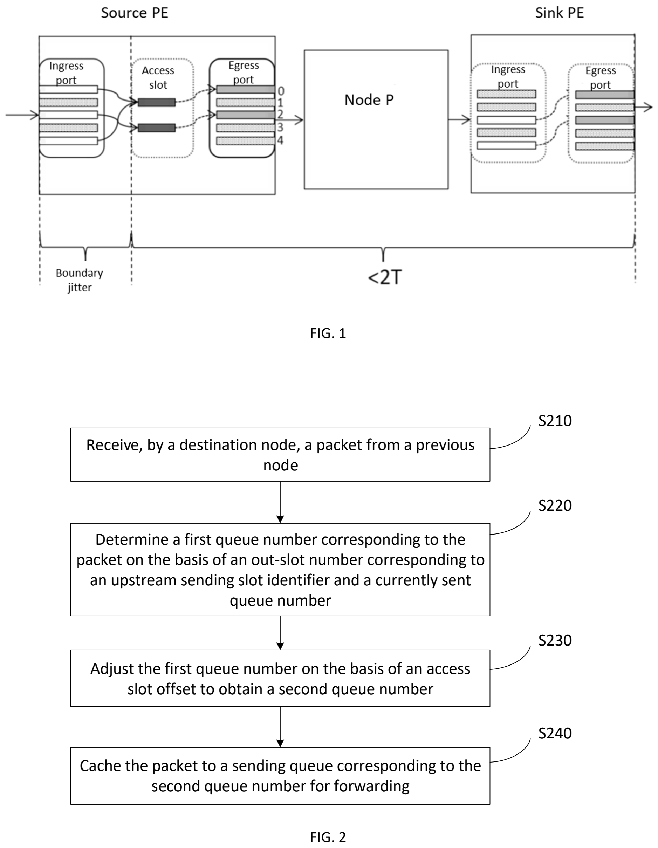

In order to solve the problem of bandwidth expansion and improve the bandwidth utilization, a precise orchestration scheme of the control plane based on slots is proposed. In this scheme, a controller precisely plans and reserves slot resources hop by hop. A certain service flow packet is allowed to access the source PE node only at a specified slot, which is called a slot access technology. However, when using this technology, as shown in FIG. 1, if the moment when the packet arrived at the source PE node is inconsistent with the access slot, the packet needs to be cached and subjected to access control according to the access slot, which may introduce jitter in the process. Currently, a periodic scheduling technology based on slot access only focuses on the jitter of a path from the packet entering the access slot to the sink PE egress, while the boundary jitter caused by the source PE due to the shaping technology such as access control is not resolved.

The quality of service is affected by end-to-end delay jitter. If the boundary jitter problem introduced by the source node (source PE) is not solved, the end-to-end jitter cannot be theoretically removed, which may lead to the difficulty in implementing the improved technical solutions based on slot orchestration and slot access in practice.

In view of this, the present application proposes a solution that can address boundary jitter introduced by the source node, improve the bandwidth utilization, and keep the overall jitter of the LDN domain within 2T.

FIG. 2 is a schematic flowchart of a packet forwarding method applied to a sink node of a deterministic network provided by embodiments of the present application.

As shown in FIG. 2, the method may be performed by a network side device. The network side device may be the sink node in the deterministic network. The method includes the following steps.

At S210, the sink node receives a packet from a previous node.

It can be understood that in a packet forwarding network, the sink node (also destination node) refers to a target node in network communication, i.e., a final destination of packet transmission. Packet forwarding refers to a process in which a packet received by one node is transmitted to a next node by means of network. In this embodiment, the previous node refers to the previous one node closer to the sink node, while upstream refers to one or more nodes located prior to the sink node. It should be noted that in the present application, the node may be an actual computer device or a virtual node or service in the network.

The packet carries an upstream sending slot identifier and an access slot offset. The upstream sending slot refers to a sending slot when an upstream node sends the packet, and the upstream sending slot identifier is used to identify the sending slot. When being transferred from the upstream node to a downstream node, one packet may carry one sending slot identifier. This identifier represents the number or a label of a slot when the packet is sent, and may serve as a unique identifier for the packet, so that the downstream node can receive and process packets in a correct order. The access slot offset (also admission slot offset, ASO) refers to a certain offset possibly existing between an arrival slot and an access slot of the packet when a source node performs slot access on a service packet. Therefore, the source node needs to extend the packet to carry the access slot offset. When the packet arrives at the sink node, the sink node needs to adjust the packet based on the access slot offset, so as to absorb boundary jitter introduced by the source node via shaping mechanisms such as slot access.

At S220, a first queue number corresponding to the packet is determined on the basis of an out-slot number corresponding to the upstream sending slot identifier and a currently sent queue number.

The out-slot number is the number of a slot in which the packet is forwarded through an egress port of the sink node. The out-slot number may be obtained based on a pre-established slot mapping relationship table, and the slot mapping relationship table is a table of correspondence between upstream sending slot numbers and out-slot numbers.

It can be understood that in the present application, when receiving one packet, the sink node may determine a queue into which the packet is placed according to the out-slot number in the packet. If packets of a plurality of slots need to be placed in the same queue, the specific order of each packet in the queue needs to be determined first according to out-slot numbers or other factors (such as priority) of different packets, that is, the first queue number of each packet is obtained. It should be noted that the first queue number is not a final queue number for sending the packet.

At S230, the first queue number is adjusted on the basis of the access slot offset to obtain a second queue number.

At S240, the packet is cached to a sending queue corresponding to the second queue number for forwarding.

It can be understood that in order to solve the problem of boundary jitter introduced by the source node, the first queue number is adjusted based on the access slot offset according to a preset rule to obtain the second queue number at S230; and at S240, when a specific transmission slot is reached, the packet with the second queue number in the queue is sent out, that is, the second queue number is the final queue number for sending the packet.

In the present application, the first queue number corresponding to the packet is determined first on the basis of the out-slot number corresponding to the upstream sending slot identifier and the currently sent queue number, then the first queue number is adjusted according to the access slot offset to obtain the second queue number, and the packet is cached to the sending queue corresponding to the second queue number for forwarding, thereby improving the scheduling mechanism of the sink node. At the same time, the queue number of the packet is adjusted based on the access slot offset in the sink node, so that the boundary jitter introduced by the source node via shaping mechanisms such as slot access can be absorbed, thereby achieving a control function for boundary jitter.

In an implementation, determining the first queue number corresponding to the packet on the basis of the out-slot number and the currently sent queue number includes that: the first queue number corresponding to the packet is determined according to a currently sent k-th queue group and a magnitude relationship between the out-slot number and the currently sent queue number. In an implementation, the sink node is provided with n queue groups, one queue group corresponds to one periodic slot template, and one periodic slot template includes N slot numbers.

It should be noted that the sink node includes an ingress port and an egress port. The ingress port receives the packet sent by the previous node, and the egress port determines the sending queue of the packet and forwards the packet.

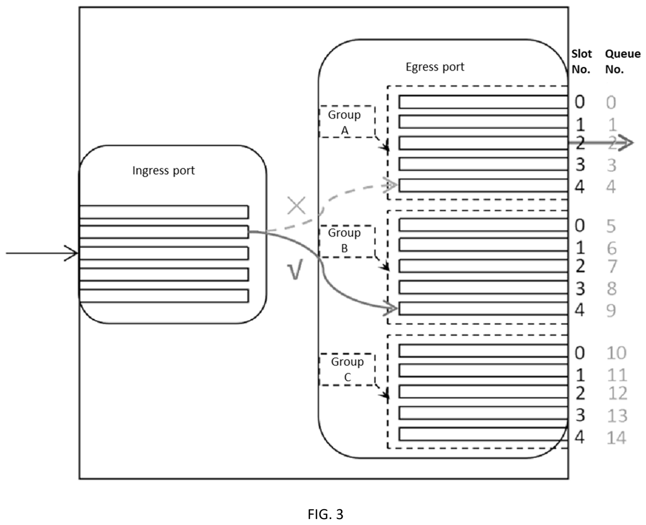

The above implementations are illustrated below by taking FIG. 3 as an example. As shown in FIG. 3, in the egress port of the sink node, the number of queue groups is increased for a periodic scheduling template, and a periodic scheduling queue is extended to three or more groups. As shown in FIG. 3, in this example, taking the expansion to three groups as an example, the number of queues that needs to be increased is 2N. The three groups of queues are called A, B, and C respectively. The slot number in each group of queues still ranges from 0 to N-1. The three groups of queues are scheduled according to a polling method (A->B->C). At each moment, there is always a group of queues in a scheduling sending state, so the overall bandwidth of the ports remains unchanged. In addition to the slot number, queue numbers are further newly added. The queue number for group A ranges from 0 to N-1, the queue number for group B ranges from N to 2N-1, and the queue number for group C ranges from 2N to 3N-1. The plurality of groups of queues are added to absorb boundary jitter from the source node.

In addition, in the embodiment of the present application, existing learning, acquisition, or calculation methods for a slot mapping relationship between upstream and downstream nodes are not changed. After the periodic scheduling queue of the sink node is extended, since a rotation order of the slot numbers at the egress port is still from 0 to N-1 (ignoring groups), the existing methods can be still used to establish the slot mapping relationship. Therefore, the above out-slot number may be obtained according to the pre-established slot mapping relationship table.

It can be understood that at every moment, there is always a group of queues in the scheduling sending state, so that the first queue number corresponding to the packet needs to be determined according to the k-th queue group currently being sent and the magnitude relationship between the out-slot number and the currently sent queue number. In an implementation, determining the first queue number corresponding to the packet according to the currently sent k-th queue group and the magnitude relationship between the out-slot number and the currently sent queue number may include one of the followings.

(1) In a case where the out-slot number is greater than the currently sent queue number, the first queue number is: (k-1)*N+y, wherein, y is the out-slot number, k is an integer less than or equal to n, and n is an integer greater than or equal to 3.

Exemplarily, continuing referring to FIG. 3, assuming that the slot number carried by the packet is x=2, the slot mapping relationship table is searched to obtain the out-slot number y=3, then: if the queue group currently being sent is group A, the currently sent queue number is t=2, which meets y>t, group A is the first queue group, and thus the corresponding first queue number is (1-1)*5+3=3. If the queue group currently being sent is group B, the currently sent queue number is t=2, which meets y>t, group B is the second queue group, and thus the corresponding first queue number is (2-1)*5+3=8. If the queue group currently being sent is group C, the currently sent queue number is t=2, which meets y>t, group A is the third queue group, and thus the corresponding first queue number is (3-1)*5+3=13.

(2) In a case where the out-slot number is less than or equal to the currently sent queue number, and the k-th queue group is not the last queue group, the first queue number is k*N+y, wherein, y is the out-slot number, k is an integer less than or equal to n, and n is an integer greater than or equal to 3.

Exemplarily, continuing referring to FIG. 3, assuming that the slot number carried by the packet is x=5, the slot mapping relationship table is searched to obtain the out-slot number y=2, then: if the queue group currently being sent is group A, the currently sent queue number is t=4, which meets y<t, group A is the first queue group and is not the last queue group, and thus the corresponding first queue number is 1*5+2=7. If the queue group currently being sent is group B, the currently sent queue number is t=4, which meets y<t, group B is the second queue group and is not the last queue group, and thus the corresponding first queue number is 2*5+2=12.

(3) In a case where the out-slot number is less than or equal to the currently sent queue number, and the k-th queue group is the last queue group, the first queue number is y, wherein, y is the out-slot number, k is an integer less than or equal to n, and n is an integer greater than or equal to 3.

Exemplarily, continuing referring to FIG. 3, assuming that the slot number carried by the packet is x=5, the slot mapping relationship table is searched to obtain the out-slot number y=2. If the queue group currently being sent is group C, the currently sent queue number is t=4, which meets y<t, group C is the third queue group, namely the last queue group, and thus the corresponding first queue number is 2. It can be understood that assuming that group C is not the last queue group, the corresponding first queue number 3*5+2=17 is obtained using the method in (2) above. If group C is the last queue group, the number range of the entire queue group is from 0 to 3N-1, namely, from 0 to 14. However, the queue number 17 is not within this range. But in the present application, the plurality of groups of queues are scheduled according to the polling method, so 17-15=2. Therefore, the queue number actually corresponding to the packet is the out-slot number.

In an implementation, adjusting the first queue number on the basis of the access slot offset to obtain the second queue number may include the following steps.

Step 1, an adjustment amount of the packet at the sink node is determined according to the access slot offset and a preset constant.

In an implementation, step 1 may include: determining the adjustment amount as C-aso, wherein C is the preset constant, C is a natural number greater than or equal to N, and aso is the access slot offset.

Step 2, according to the adjustment amount, the second queue number is determined as (z+d)%(n*N), wherein z is the first queue number, and d is the adjustment amount.

It can be understood that in order to restore the original relative relationship of slots of the service packet, the total offset of all packets at the source node and the sink node needs to be equal. If the offset of the packet at the source node is the access slot offset (aso), then the adjustment amount (d) at the sink node is constant-aso, this is because a sum of afterwards offsets of all the packets is aso+(constant-aso)=constant. For example, for any two packets P1 and P2 of a service flow, assuming that P1 has an offset a at the source node and P2 has an offset b at the source node, a and b are encapsulated in the packet and carried to the sink node. In order to restore the original relative relationship of slots of the packets P1 and P2, P1 may be further offset afterwards by N-a and P2 may be offset afterwards by N-b at the destination PE. At this time, the total afterwards offset of each of the packets P1 and P2 at the source PE and the destination PE is N, so that P1 and P2 restore the original slot relative relationship. In addition, since the value range of aso is [0,N], the value range of the constant is [N, ∞), which means that the constant may take a minimum value N.

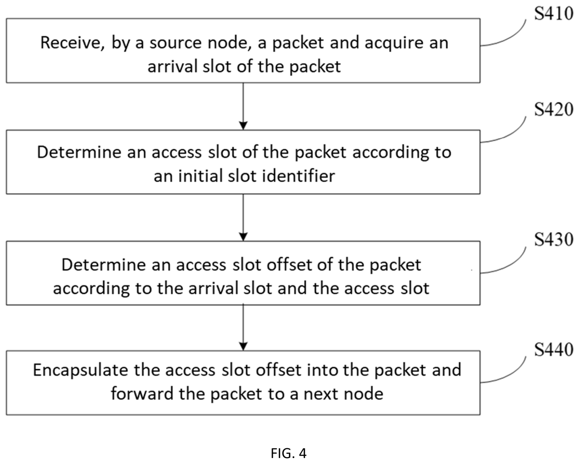

FIG. 4 is a schematic flowchart of a packet forwarding method applied to a source node of a deterministic network provided by embodiments of the present application.

As shown in FIG. 4, the method may be performed by a network side device. The network side device may be the source node in the deterministic network. The method includes the following steps.

At S410, the source node receives a packet and acquires an arrival slot of the packet.

The packet includes an initial slot identifier of the packet.

The arrival slot refers to a slot when the packet arrives at the source node, and the initial slot identifier refers to a slot identifier of an upstream node.

At S420, an access slot of the packet is determined according to the initial slot identifier.

The access slot may be obtained according to a pre-established slot mapping relationship table, and the slot mapping relationship table is used to indicate a mapping relationship between an initial slot identifier of the upstream node and an access slot of a current node.

At S430, an access slot offset of the packet is determined according to the arrival slot and the access slot.

In an implementation, S430 includes that: the access slot offset of the packet is determined according to the number of queues in a periodic slot template and a magnitude relationship between the arrival slot and the access slot. In another implementation, determining the access slot offset of the packet according to the number of queues in the periodic slot template and the magnitude relationship between the arrival slot and the access slot may include one of the followings.
(1) In a case where the arrival slot is less than the access slot, the access slot offset is determined as n-m.
(2) In a case where the arrival slot is greater than the access slot, the access slot offset is determined as N+n-m.
(3) In a case where the arrival slot is equal to the access slot, the access slot offset is determined as x*N.

Where, n is the access slot, m is the arrival slot, N is the number of queues, x is an integer greater than or equal to 0, m is an integer greater than or equal to 0, and n is greater than or equal to N-1.

The above implementation is illustrated below by an example. Assuming that the number of slot queues in the periodic template is denoted as N, an arrival slot of a certain packet in the service flow is denoted as m, and an actual access slot of the packet is n, then 0≤m, n≤N-1, and the following three cases are included.
(1) When m<n, the access slot offset is n-m.
(2) When m>n, the access slot offset is N+n-m.
(3) When m=x*N, as a current receiving slot allows packet access, it may be considered that the access slot offset is 0, or it may be considered that the packet has been cached and waited for one cycle, and then the slot offset is N.

It can be seen from this that in the embodiment of the present application, a possible value range of the access slot offset is [0, x*N].

At S440, the access slot offset is encapsulated into the packet, and the packet is forwarded to a next node.

After acquiring the access slot offset, the source node extends and encapsulates the access slot offset in the service packet. An encapsulation format may include Internet protocol version 4 (IPv4)/Internet protocol version 6 (Ipv6), multi-protocol label switching (MPLS), segment routing (SR)/segment routing IPv6 (SRv6), etc. The corresponding encapsulation format may be selected according to different packet types. The present application does not limit the specific extension or encapsulation method.

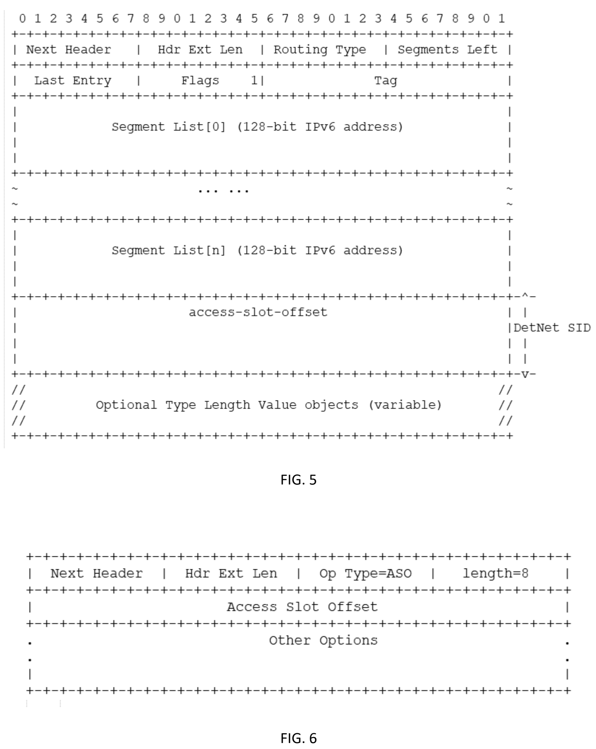

For example, for a service packet in a packet type of SRv6, relevant information may be encapsulated in a segment routing header (SRH) packet header or an IPv6 DoH packet header. As shown in FIG. 5, for the SRH packet header, 1 bit may be placed in a flags field to indicate addition of a deterministic networking service identifier (DetNet SID) in the SID-List, which is used for carrying deterministic service-related information, including a service flow ID, a slot label, and ASO information newly added in the present disclosure. If the ASO information is carried in an IPv6 DNS over HTTPS (IPv6 DoH) header, one new Type-Length-Value options (Option TLV) may be added. As shown in FIG. 6, the ASO field occupies 8 bytes.

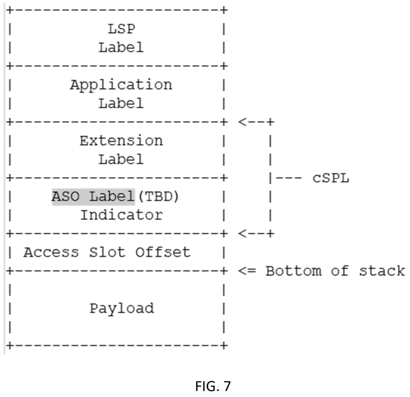

For example, for a service packet in a packet type of SR-MPLS, it may indicate the presence of a special label at the bottom of a stack, such as a synonymous flow label (SFL) technology defined in RFC8957, and indication of carrying of a special label based on a special purpose label (SPL) or extended SPL. For another example, 2 bytes may be defined in a Path Segment label of the SR packet to carry the ASO information. For example, FIG. 7 shows an encapsulation format in which carrying of an ASO label is defined by using an SPL.

It should be noted that the slot offset field only needs to be acquired at the sink node. When forwarding at an intermediate node, there is no need to parse the information in this field, and the packet is only forwarded according to the existing periodic scheduling mechanism.

In the embodiment of the present application, the access slot offset of the packet is determined according to the arrival slot and the access slot of the packet, and the packet is extended at the source node to carry the access slot offset. Finally, the packet carrying the access slot offset is forwarded to the next node, so that the downstream node overcomes boundary jitter introduced by the source node based on the access slot offset.

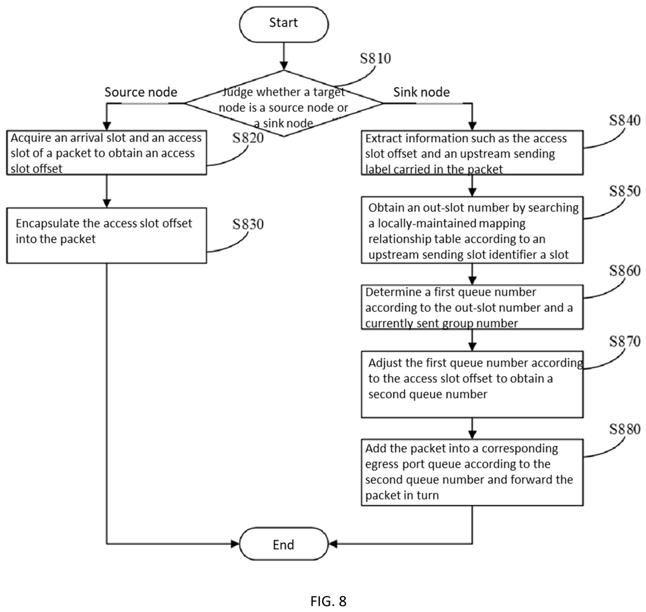

FIG. 8 is a schematic flowchart of a method for controlling boundary jitter provided by embodiments of the present application, which can implement various processes implemented in the method embodiments shown in FIG. 2 to FIG. 7.

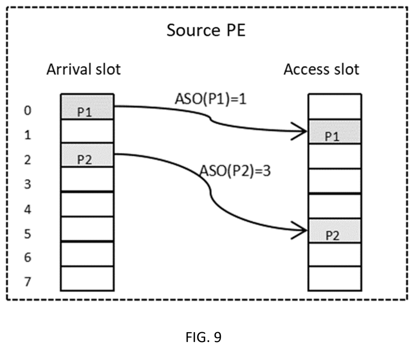

Before illustrating this embodiment, referring to FIG. 9, the number of queues in the periodic template is set to be N=8 (slot numbers 0-7). For two packets P1 and P2 of a certain service flow, it is assumed that at the source PE node, P1 arrives at the slot 0 and enters the access slot 1, and P2 arrives at the slot 2 and enters the access slot 5.

In some cases, this embodiment includes the following steps.

At S810, whether a target node is a source node or a sink node is judged.

The target node is a node at which a packet currently arrives. If the target node is the source node, S820 is performed. If the target node is the sink node, S830 is performed.

At S820, an arrival slot and an access slot of each packet are acquired to obtain an access slot offset.

If P1 arrives at the slot 0 and enters the access slot 1, an offset aso between the arrival slot and the access slot of P1 is 1. If P2 arrives at the slot 2 and enters the access slot 5, an offset aso between the arrival slot and the access slot of P2 is 3. An original slot difference between P1 and P2 is 2, and a slot difference after access control is 4.

At S830, the access slot offset is encapsulated into the packet.

The access slot offset is encapsulated into the corresponding service packet, and the service packet is carried by the service packet and sent to the sink node.

At S840, information such as the access slot offset and an upstream sending label carried in the packet is extracted.

At S850, an out-slot number is obtained by searching a locally-maintained slot mapping relationship table according to an upstream sending slot identifier.

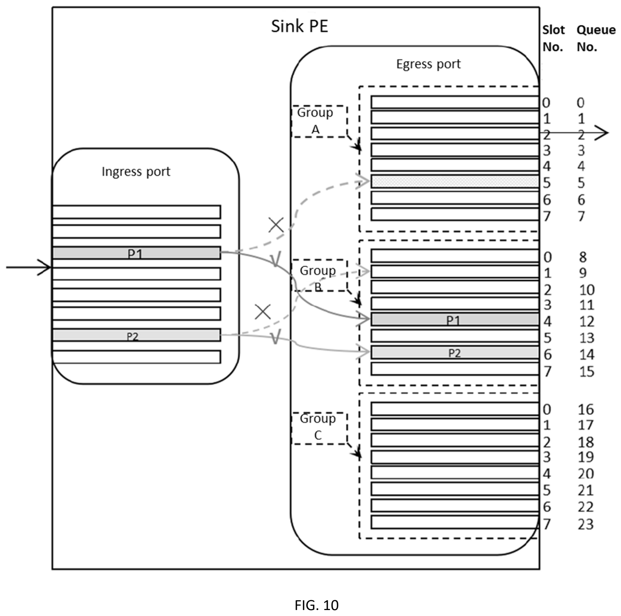

For S840 and S850, as shown in FIG. 10, assuming that an upstream slot label carried by P1 when arriving at the sink node is 2, according to the periodic scheduling principle, an upstream slot label carried by P2 when arriving at the sink node is 6. It is assumed that a slot mapping relationship of 0->3 (1->4, 2->5, 3->6, 4->7, 5->0, 6->1, 7->2) is formed between a penultimate hop node and the sink node.

For the packet P1: the slot number carried in the packet is x=2, and the slot mapping table is searched to obtain the out-slot number y=5.

For the packet P2: the slot number carried in the packet is x=6, and the slot mapping table is searched to obtain the out-slot number y=1.

At S860, a first queue number is determined according to the out-slot number and a currently sent group number.

Continuing to refer to FIG. 10, three groups of queues are used at the sink node for jitter control. When the packet P1 arrives, queue 2 at group A is currently in a sending state, and when P2 arrives, queue 6 at group A is currently in a sending state.

For the packet P1: the out-slot number is y=5. Since queue t=2 at group A is currently sending and y>t is met, the corresponding first queue number is z=(k-1)*N+y=(1-1)*8+5=5.

For the packet P2: the out-slot number is y=1. Since queue t=6 at group A is currently sending and y≤t is met, the corresponding first queue number is z=k*N+y=1*8+1=9.

At S870, the first queue number is adjusted according to the access slot offset to obtain a second queue number.

For the packet P1: if the carried access slot offset aso is equal to 1, then the second queue number is z=(z+d)%(n*N)=(z+(N-aso))%(3*N)=(5+(8-1))%(3*8)=12.

For the packet P2: if the carried access slot offset aso is equal to 3, then the second queue number is z=(z+d)%(n*N)=(z+(N-aso))%(3*N)=(9+(8-3))%(3*8)=14.

At S880, the packet is added into a corresponding egress port queue according to the second queue number and forwarded in turn.

The packet P1 is added into a queue numbered 12, and the packet P2 is put in a queue numbered 14.

In this embodiment, a difference value between the arrival slots of the packets P1 and P2 at the source node is 2, and a difference value between egress queue numbers of the packets P1 and P2 at the sink node is also 2. Therefore, the end-to-end jitter can be controlled within 2T, thereby achieving the control of boundary jitter which is introduced by the source node.

It should be noted that in order to avoid bandwidth congestion, orchestration is still performed according to the slots from the source node to a penultimate hop node to maximize bandwidth utilization. At the sink node, due to the restoration of an original slot relative relationship of the packets, the packet pattern is determined by original customer service characteristics and does not support accurate calculation based on slot granularity. Therefore, orchestration needs to be performed according to bandwidth expansion at the sink node. Usually, aggregated orchestration is performed at an intermediate node, while at the destination PE node, only service flows that land from the same port need to be subjected to aggregated orchestration. Therefore, in the technical solution of the present application, it is possible to ensure that the overall jitter of an LDN domain is less than 2T while significantly improving the bandwidth utilization.

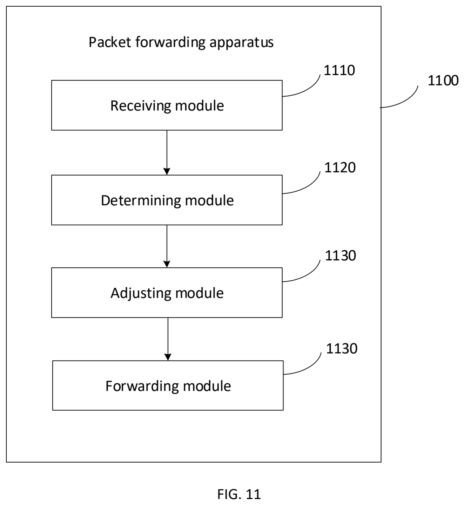

FIG. 11 shows a schematic structural diagram of a packet forwarding apparatus provided by embodiments of this specification. As shown in FIG. 9, the packet forwarding apparatus 1100 may include a receiving module 1110, a determining module 1120, an adjusting module 1130, and a forwarding module 1140.

In this embodiment, the receiving module 1110 is configured to receive a packet sent by a previous node, wherein the packet carries an upstream sending slot identifier and an access slot offset. The determining module 1120 is configured to determine a first queue number corresponding to the packet on the basis of an out-slot number corresponding to the upstream sending slot identifier and a currently sent queue number. The adjusting module 1130 is configured to adjust the first queue number on the basis of the access slot offset to obtain a second queue number. The forwarding module 940 is configured to cache the packet to a sending queue corresponding to the second queue number for forwarding.

In an implementation, the determining module 1120 is configured to determine the first queue number corresponding to the packet according to a currently sent k-th queue group and a magnitude relationship between the out-slot number and the currently sent queue number.

In an implementation, the sink node is provided with n queue groups , one queue group corresponds to one periodic slot template, and one periodic slot template includes N slot numbers. Determining the first queue number corresponding to the packet according to the currently sent k-th queue group and the magnitude relationship between the out-slot number and the currently sent queue number includes: in a case where the out-slot number is greater than the currently sent queue number, the first queue number is determined as: (k-1)*N+y; or in a case where the out-slot number is less than or equal to the currently sent queue number, the first queue number is determined as k*N+y if the k-th queue group is not the last queue group, or the first queue number is determined as y if the k-th queue group is the last queue group; wherein, Y is the out-slot number, k is an integer less than or equal to n, and n is an integer greater than or equal to 3.

In an implementation, the adjusting module 1130 is configured to determine an adjustment amount of the packet at the sink node according to the access slot offset and a preset constant; and determine, according to the adjustment amount, the second queue number as (z+d)%(n*N), wherein z is the first queue number, and d is the adjustment amount.

In an implementation, the adjusting module 1130 is configured to determine the adjustment amount as C-aso, wherein C is the preset constant, C is a natural number greater than or equal to N, and aso is the access slot offset.

The packet forwarding apparatus provided by the embodiment of the present application can implement various processes implemented in the method embodiments shown in FIG. 1 to FIG. 3, which will be omitted here to avoid repetitions.

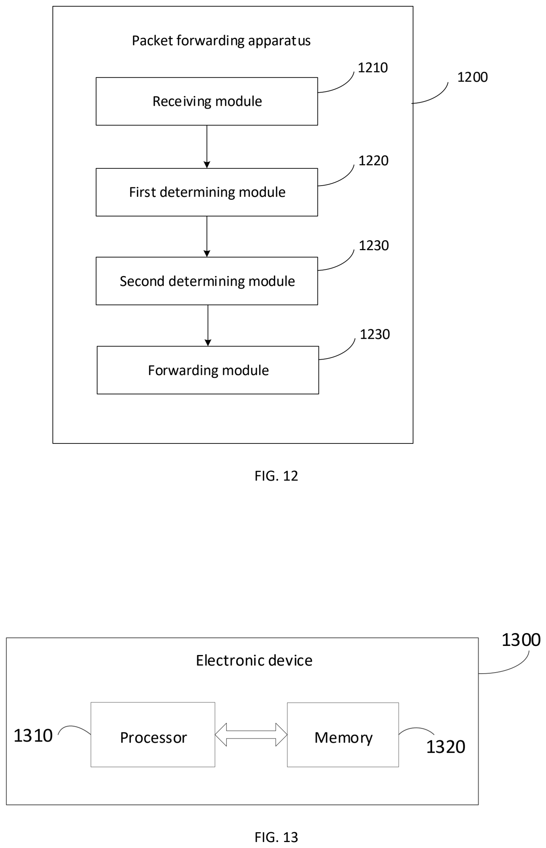

FIG. 12 shows a schematic structural diagram of another packet forwarding apparatus provided by embodiments of this specification. As shown in FIG. 12, the packet forwarding apparatus 1200 may include an acquiring module 1210, a first determining module 1220, a second determining module 1230, and a forwarding module 1240.

In this embodiment, the acquiring module 1210 is configured to receive a packet and acquire an arrival slot of the packet, wherein the packet includes an initial slot identifier of the packet. The first determining module 1220 is configured to determine an access slot of the packet according to the initial slot identifier. The second determining module 1230 is configured to determine an access slot offset of the packet according to the arrival slot and the access slot. The forwarding module 1240 is configured to encapsulate the access slot offset into the packet and forward the packet to a next node.

In an implementation, the second determining module 1230 is configured to determine the access slot offset of the packet according to a number of queues in a periodic slot template and a magnitude relationship between the arrival slot and the access slot.

In an implementation, the second determining module 1230 is configured to determine the access slot offset as n-m in a case where the arrival slot is less than the access slot,; or determine the access slot offset as N+n-m in a case where the arrival slot is greater than the access slot,; or determine the access slot offset as x*N in a case where the arrival slot is equal to the access slot,; wherein, n is the access slot, m is the arrival slot, N is the number of queues, x is an integer greater than or equal to 0, m is an integer greater than or equal to 0, and n is greater than or equal to N-1.

The packet forwarding apparatus provided by the embodiment of the present application can implement various processes implemented in the method embodiments shown in FIG. 4, which will be omitted here to avoid repetitions.

In an implementation, as shown in FIG. 13, an embodiment of the present application further provides an electronic device 1300, including a processor 1310, a memory 1320, and a program or instruction stored on the memory 1320 and able to run on the processor 1310. The program or the instruction, when executed by the processor 1310, implements various processes of the above packet forwarding method embodiment, which will be omitted here to avoid repetitions.

An embodiment of the present application further provides a computer-readable storage medium, the computer-readable storage medium stores a program or an instruction, and the program or the instruction, when executed by a processor, implements various processes of the above packet forwarding method embodiment, which will be omitted here to avoid repetitions.

The processor is a processor in the electronic device in the above embodiment. The readable storage medium includes a computer-readable storage medium, such as a computer read-only memory (ROM), a random access memory (RAM), a magnetic disk, or an optical disc.

An embodiment of the present application additionally provides a chip, the chip includes a processor and a communication interface, the communication interface is coupled to the processor, and the processor is used for running a program or instruction to implement various processes of the above packet forwarding method embodiment, which will be omitted here to avoid repetitions.

It should be understood that the chip mentioned in the embodiment of the present application may further be referred to as a system-level chip, a system chip, a chip system, or a system on chip.

It should be noted that terms "including", "containing", or any other variations herein are intended to cover non-exclusive inclusion, such that a process, method, item or apparatus that includes a series of elements not only includes those elements, but also other elements that are not explicitly listed, or further include elements inherent in such the process, method, item or apparatus. Without more limitations, elements defined by a statement "including one" do not exclude the existence of other identical elements in the process, method, item or apparatus that includes the said elements. In addition, it is to be pointed out that the scope of the methods and apparatuses in the implementations of the present application is not limited to performing functions in an order shown or discussed, but may further include performing functions in a substantially simultaneous mode or in an opposite order according to the involved functions. For example, the described methods may be executed in a different order from the described ones, and various steps may also be added, omitted, or combined. In addition, features described with reference to certain examples may be combined in other examples.

According to the descriptions in the foregoing implementations, those skilled in the art may clearly learn that the method according to the above embodiment may be implemented by relying on software and a commodity hardware platform or by using hardware. However, in many cases, the former is the better implementation. Based on such an understanding, the technical solutions of the present application essentially, or the part contributing to the prior art, may be presented in the form of a software product. The computer software product is stored in a storage medium (such as an ROM/RAM, a magnetic disk, or an optical disc) including several instructions to enable a terminal (which may be a mobile phone, a computer, a server, an air conditioner, a network device, or the like) to execute the methods described in all the embodiments of the present application.

The embodiments of the present application have been described above with reference to the accompanying drawings. However, the present application is not limited to the above specific implementations, and the above specific implementations are merely exemplary and not limitative. Those of ordinary skill in the art may make various variations under the teaching of the present application without departing from the spirit of the present application and the protection scope of the claims, and such variations shall all fall within the protection scope of the present application.

## Claims

1. A packet forwarding method, performed by a sink node of a deterministic network, comprising:
receiving, by the sink node, a packet from a previous node, wherein the packet carries an upstream sending slot identifier and an access slot offset;
determining a first queue number corresponding to the packet on the basis of an out-slot number corresponding to the upstream sending slot identifier and a currently sent queue number;
adjusting the first queue number on the basis of the access slot offset, to obtain a second queue number; and
caching the packet to a sending queue corresponding to the second queue number for forwarding.

2. The method according to claim 1, wherein determining the first queue number corresponding to the packet on the basis of the out-slot number and the queue number comprises:
determining the first queue number corresponding to the packet according to a currently sent k-th queue group and a magnitude relationship between the out-slot number and the currently sent queue number.

3. The method according to claim 2, wherein the sink node is provided with n queue groups, one queue group corresponds to one periodic slot template, and one periodic slot template comprises N slot numbers; and
determining the first queue number corresponding to the packet according to the currently sent k-th queue group and the magnitude relationship between the out-slot number and the currently sent queue number comprises:
determining, in a case where the out-slot number is greater than the currently sent queue number, the first queue number as: (k-1)*N+y; or
determining, in a case where the out-slot number is less than or equal to the currently sent queue number, the first queue number as k*N+y if the k-th queue group is not the last queue group, or the first queue number as y if the k-th queue group is the last queue group;
wherein, y is the out-slot number, k is an integer less than or equal to n, and n is an integer greater than or equal to 3.

4. The method according to claim 3, wherein adjusting the first queue number on the basis of the access slot offset, to obtain the second queue number comprises:
determining an adjustment amount of the packet at the sink node according to the access slot offset and a preset constant; and
determining, according to the adjustment amount, the second queue number as (z+d)%(n*N), wherein z is the first queue number, and d is the adjustment amount.

5. The method according to claim 4, wherein determining the adjustment amount of the packet at the sink node according to the access slot offset and the preset constant comprises:
determining the adjustment amount as C-aso, wherein C is the preset constant, C is a natural number greater than or equal to N, and aso is the access slot offset.

6. A packet forwarding method, performed by a source node of a deterministic network, comprising:
receiving, by the source node, a packet and acquiring an arrival slot of the packet, wherein the packet comprises an initial slot identifier of the packet;
determining an access slot of the packet according to the initial slot identifier;
determining an access slot offset of the packet according to the arrival slot and the access slot;
and
encapsulating the access slot offset into the packet and forwarding the packet to a next node.

7. The method according to claim 6, wherein determining the access slot offset of the packet according to the arrival slot and the access slot comprises:
determining the access slot offset of the packet according to a number of queues in a periodic slot template and a magnitude relationship between the arrival slot and the access slot.

8. The method according to claim 7, wherein determining the access slot offset of the packet according to the number of queues in the periodic slot template and the magnitude relationship between the arrival slot and the access slot comprises:
determining, in a case where the arrival slot is less than the access slot, the access slot offset as n-m; or
determining, in a case where the arrival slot is greater than the access slot, the access slot offset as N+n-m; or
determining, in a case where the arrival slot is equal to the access slot, the access slot offset as x*N;
wherein, n is the access slot, m is the arrival slot, N is the number of queues, x is an integer greater than or equal to 0, m is an integer greater than or equal to 0, and n is greater than or equal to N-1.

9. A packet forwarding apparatus, comprising:
a receiving module, configured to receive a packet from a previous node, wherein the packet carries an upstream sending slot identifier and an access slot offset;
a determining module, configured to determine a first queue number corresponding to the packet on the basis of an out-slot number corresponding to the upstream sending slot identifier and a currently sent queue number;
an adjusting module, configured to adjust the first queue number on the basis of the access slot offset to obtain a second queue number; and
a forwarding module, configured to cache the packet to a sending queue corresponding to the second queue number for forwarding.

10. A packet forwarding apparatus, comprising:
an acquiring module, configured to receive a packet and acquire an arrival slot of the packet, wherein the packet comprises an initial slot identifier of the packet;
a first determining module, configured to determine an access slot of the packet according to the initial slot identifier;
a second determining module, configured to determine an access slot offset of the packet according to the arrival slot and the access slot; and
a forwarding module, configured to encapsulate the access slot offset into the packet and forward the packet to a next node.

11. An electronic device, comprising a processor and a memory, wherein the memory stores a program or instruction able to run on the processor, and the program or the instruction, when executed by the processor, implements the packet forwarding method according to any one of claims 1 to 5, or implements the packet transmission method according to any one of claims 6 to 8.

12. A storage medium, storing a program or instruction thereon, wherein the program or the instruction, when executed by a processor, implements the packet forwarding method according to any one of claims 1 to 5, or implements the packet transmission method according to any one of claims 6 to 8.
